# EUROPEAN PATENT SPECIFICATION

(11) **EP 4 472 457 B1**
(45) Date of publication and mention of the grant of the patent: **15.10.2025**
(21) Application number: 23705653.6
(22) Date of filing: 26.01.2023
(51) Int. Cl.: A43B 1/00, A43B 13/12, B29D 35/00, B29D 35/12, B29D 35/14

(54) **PROCESS FOR THE MANUFACTURE OF SOLES FOR SHOES**
VERFAHREN ZUR HERSTELLUNG VON SCHUHSOHLEN
PROCÉDÉ DE FABRICATION DE SEMELLES POUR CHAUSSURES

(30) Priority: 02.02.2022 IT 202200001787
(43) Date of publication of application: 11.12.2024
(73) Proprietor: Garbin, Mauro, 27029 Vigevano (PV) (IT)
(72) Inventor: Garbin, Mauro, 27029 Vigevano (PV) (IT)
(74) Representative: Brunacci, Marco
(86) International application number: PCT/IB2023/050660
(87) International publication number: WO 2023/148583

(56) References cited:
- EP-A1- 3 858 574
- US-A1- 2005 084 685
- US-A1- 2010 122 476
- US-A1- 2019 239 596

## Description

### Technical Field

The present invention relates to a process for the manufacture of soles for shoes, particularly luxury sports and/or casual shoes of the sneaker type.

### Background Art

With particular reference to the luxury footwear sector, there is nowadays an increasing need for shoes that meet the aesthetic requirements of a particularly demanding clientele.

Indeed, as is well known, the luxury market is characterized by the uniqueness, value, excellent quality and high price of the products sold.

In this context, with reference to sports shoes of the sneaker type, it is necessary for them to have a refined aesthetic appearance that distinguishes them from more widely purchased shoes.

Such requirements are, in this case, particularly straightforward as to the soles of luxury shoes.

In this regard, soles are generally made of polyurethane (PU) and are produced by means of technological plastic deformation processes such as, e.g., extrusion. It should be borne in mind, however, that the morphological characteristics of extruded polyurethane, and in particular the high porosity thereof, give the sole an aesthetically unappealing appearance that is rather undesirable to buyers of luxury shoes, thus reducing their interest in purchasing them.

It is, in fact, common that during the processing of polyurethane, numerous air bubbles are generated within the polyurethane itself which, by remaining subsequently stuck on the outer walls of the sole, result in impermissible blemishes/defects in a luxury product.

This problem is further exacerbated if the soles are colored, as the use of paints on them will have the effect of further enhancing their porous structure.

To fix at least part of the aforementioned drawbacks, the use of coating films to be applied to the surface of the soles is known.

The coating films are particularly made of thermoplastic polyurethane (TPU) and, therefore, are particularly elastic when subjected to tensile stress.

This allows the coating film to be spread easily, giving, in this case, a size corresponding to that of the sole to be coated.

Once pulled, simply apply the coating film to the sole of the shoe, making it adhere thereto, to cover the pores from view from the outside and, in doing so, to give the shoe an especially fine appearance.

In this regard, a first known type comprises already colored coating films to be applied directly onto the sole.

In actual facts, in this case it is possible to manufacture a sole of a predefined color by selecting the coating film of the corresponding color and by coupling the latter to the sole, making it adhere thereto.

This first type of coating film, however, has several drawbacks.

It is, in fact, readily apparent that in order to be able to offer a wide range of colored soles, it is necessary to have an inconveniently large number of coating films available and, in particular, at least one coating film for each desired color.

This inevitably results in a particularly expensive drawback, the greater the more soles of different colors that are to be manufactured.

What is more, it is important to consider that the pulling of the coating films of this first type makes the coloring of the latter somewhat uneven, eventually fading, especially at the points of greatest spreading.

This fact inconveniently requires one or more phases of painting the sole in order to give the latter the color intensity with which the coating film applied thereto was previously provided.

An additional aspect to keep in mind consists in the fact that the colored coating films have low stability over time, i.e., they are subjected to sudden degradation phenomena that do not allow them to be stored for a long time.

Finally, it is important to mention that the manufacture of colored coating films can require even very long total times for batch delivery (even 8 weeks) and purchased batch sizes of no less than predetermined and, often, rather large values (even 1000 square meters of coating films).

However, it is easy to appreciate that these characteristics are absolutely incompatible with the aforementioned needs of the luxury market (which, as is well known, requires short lead times and small batch sizes) and, therefore, make this first type of coating film unsuitable to provide them.

A second known type of coating film has neutral colors to be colored (e.g., by means of the so-called "plotters" and/or digital printers) before they can be pulled and applied onto the sole.

In this case, by having an adequate number of different paints available, it is clearly possible to obtain coating films which are differently colored from each other.

However, this second type is also amenable to improvement.

In fact, the color applied on the coating film has rather rapid degradation processes, particularly when the latter is pulled, eventually fading and losing its intensity.

Not only that, but such coating films are distinguished by a particularly high rate of wear and tear and tend, therefore, to degrade very rapidly as a result of, e.g., repeated friction of the shoes on the ground and/or between the shoes themselves during walking.

Processes for the manufacture of soles of the known type are described in EP3858574A1, US2010122476A1, US2005084685A1 and US2019239596A1.

### Description of the Invention

The main aim of the present invention is to devise a process for the manufacture of soles for shoes which allows obtaining colored soles that are durable and resistant to wear and tear, particularly friction wear.

Within such main aim, one object of the present invention is to devise a process for the manufacture of soles for shoes which allows obtaining soles that are deemed aesthetically valuable and appealing to consumers, stimulating them to purchase.

Another object of the present invention is to devise a process for the manufacture of soles for shoes which allows the aforementioned drawbacks of the prior art to be overcome within the framework of a simple, rational, easy and effective to use as well as affordable solution.

The aforementioned objects are achieved by this process for the manufacture of soles for shoes having the characteristics of claim 1.

### Brief Description of the Drawings

Other characteristics and advantages of the present invention will become more apparent from the description of a preferred, but not exclusive, embodiment of a process for the manufacture of soles for shoes, illustrated by way of an indicative, yet non-limiting example, in the attached tables of drawings in which:
Figure 1 illustrates the phase of preparation of the process according to the invention;
Figure 2 illustrates the phase of coloring of the process according to the invention;
Figure 3 illustrates the phase of molding of the process according to the invention;
Figure 4 is an axonometric view of the sole according to the invention.

### Embodiments of the Invention

According to one aspect, the present invention relates to a process for the manufacture of soles for shoes.

The process for the manufacture of soles for shoes comprises at least one phase of preparation A of at least one forming mold 1 of at least one sole 2.

Specifically, the forming mold 1 comprises at least one forming cavity 3 having size and conformation corresponding to that of the sole 2 to be formed.

Specifically, for the purpose of manufacturing at least one sole 2 intended to fit a right foot and/or at least one sole 2 intended to fit a left foot, the forming mold 1 comprises two forming cavities 3.

Preferably, the forming mold 1 is made at least partly of aluminum.

The use of different materials for the manufacture of the forming mold 1 cannot be ruled out from the scope of this disclosure, as long as the choice of such materials allows, however, the sole 2 to be effectively formed inside the forming cavity 3.

For example, forming molds 1 made of stainless steel cannot be ruled out.

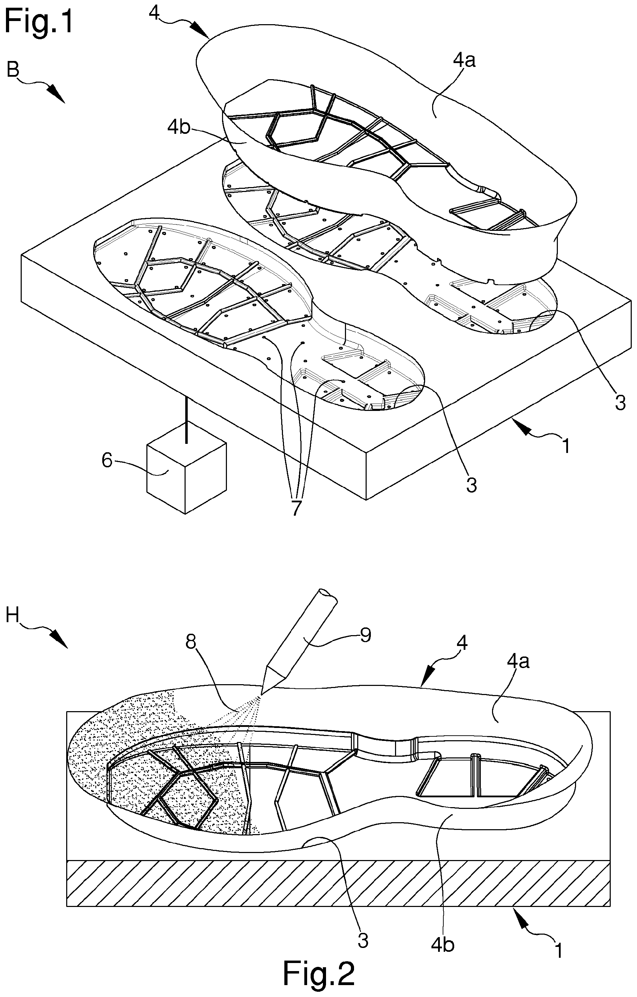

Next, the process comprises at least one phase of supply B, illustrated by way of example in Figure 1, of at least one coating film 4 inside the forming mold 1.

Specifically, the coating film 4 is provided with at least one inner face 4a arranged, in use, in contact with the sole 2 and with at least one outer face 4b, opposite the inner face 4a.

Preferably, the coating film 4 is made at least partly of thermoplastic polyurethane (TPU).

Again, the coating film 4 is between 30 µm and 400 µm thick, better still between 30 µm and 300 µm, preferably between 30 µm and 200 µm.

In the supply phase B, the coating film 4 is housed inside the forming cavity 3. Precisely, the whole surface of the outer face 4b of the coating film 4 is arranged in direct contact with the forming cavity 3.

Optionally, the process comprises, between the preparation phase A and the supply phase B, at least one insertion phase C of at least one tread 5 into the forming mold 1.

In detail, during the insertion phase C, the tread 5 is housed inside at least one of the forming cavities 3.

Once the tread 5 is housed in the forming cavity 3, the tread 5 and the coating film 4 can be associated with each other, that is, made to adhere to each other. For this purpose, the process comprises at least one bonding phase D of the tread 5 to the coating film 4 performed subsequently to the insertion phase C.

In this case, the bonding phase D comprises at least one step of placing D1 at least one adhesive material on the tread 5 which adhesive material is adapted to make the tread 5 and the coating film 4 adhere to each other.

In actual facts, the step of placing D1 consists in applying one or more adhesive materials on the tread 5.

Preferably, the adhesive material is of the type of glue, or other types of adhesive materials still known to the expert in the field.

In other words, once the supply phase B is performed, the adhesive material is placed between the tread 5 and the coating film 4.

Thus, it is, therefore, possible to bind the tread 5 and the outer face 4b together and to further increase, by doing so, the durability and resistance to wear and tear of the sole 2.

Not only that, but the fact of providing a tread 5 constrained to the coating film 4 also allows the stability and ground grip of the sole 2 to be greatly increased, thus making it safer to use.

Conveniently, the process comprises at least one spreading phase E of the coating film 4.

During the spreading phase E, the coating film 4 is subjected to tensile stress so that it adheres evenly to the surface of the forming cavity 3.

The coating film 4 is, in fact, endowed with remarkable elasticity and ductility due, primarily, to its making from thermoplastic polyurethane (TPU).

This, therefore, allows the coating film 4 to be deformed to give the latter a surface dimension substantially matching that of the forming cavity 3 in which it is housed.

In this way, in fact, the coating film 4 can effectively coat the sole 2, protecting it evenly from wear and tear.

Preferably, the spreading phase E is performed by means of pneumatic suction means 6 associated with the forming mold 1.

The suction means 6 may be of the type of a pump, e.g. a vacuum pump, or of other types still known to the expert in the field that allow, in all cases, the coating film 4 to be spread to give it the same size as the forming cavity 3 in which it is housed.

In this regard, the forming mold 1 comprises a plurality of suction holes 7 and/or suction channels which are made on the forming cavity 3 and are associated with the suction means 6 in a fluid-operated manner.

The suction means 6 are configured to generate a suction force which allows drawing a pressurized air stream through the suction holes 7 and/or the suction channels.

This allows the pressure present in the forming cavity 3 to be reduced to a value below atmospheric pressure and, in this way, to exert a pulling force on the coating film 4 that allows it to spread.

By doing so, it is possible to give the coating film 4 a surface dimension substantially matching that of the forming cavity 3 quite smoothly and effectively.

The special expedient of providing a spreading phase E allows, among other things, obtaining a coating film 4 with a particularly smooth surface and substantially free of surface irregularities.

Such morphological characteristics evidently allow for the manufacture of a sole 2 with particularly fine aesthetic features which, therefore, can stimulate consumers to purchase.

Advantageously, the process comprises at least one preheating phase F of the coating film 4 in the forming cavity 3 to at least one preheating temperature.

The preheating phase F is performed subsequently to the spreading phase E.

Specifically, the preheating temperature is comprised between 20°C (room temperature) and 50°C.

By preheating the coating film 4, the adhesion between the latter and the forming cavity 3 can be greatly increased, thus giving the coating film 4 the precise conformation and size of the forming cavity 3.

By doing so, it is clearly possible to manufacture a sole 2 which is substantially free of aesthetic defects and, therefore, aesthetically appreciable.

Usefully, the process comprises at least one heating phase G of the forming mold 1 to at least one heating temperature.

Specifically, the heating temperature is comprised between 30 °C and 95 °C. Numerous advantages result in providing a heating phase G, among which the increased adhesion between the coating film 4 and the tread 5 and/or the sole 2. In addition, it is good to keep in mind that thermoplastic polyurethane (TPU) from which the coating films 4 are made is a rather fragile material and, therefore, can be damaged or even torn if it is pulled too hard.

In this sense, the fact of providing a heating phase G allows the spreading phase E to be performed absolutely efficiently and safely.

In fact, by heating the coating film 4 and bringing it, in so doing, to its softening temperature, it is possible to drastically increase the elasticity thereof and, in this way, to avert the same from being damaged or even from being torn during the spreading phase E.

In this regard, the heating phase G can be usefully performed before the spreading phase E.

According to the invention, the process comprises at least one coloring phase H of the inner face 4a, illustrated by way of an example in Figure 2.

In particular, the coloring phase H is performed subsequently to the spreading phase E.

Similarly, the coloring phase H is performed subsequently to both the preheating phase F and the heating phase G.

It is emphasized, first of all, that performing the coloring phase H on the inner face 4a allows obtaining colored soles 2 provided with high durability and remarkable wear resistance, especially friction wear.

In fact, it is good to keep in mind that during the use of the soles 2, the repeated friction of the shoes to the ground and/or between the shoes themselves during walking is shown by wearing down mainly the tread 5 and/or the outer face 4b, and not, therefore, the inner face 4a.

In this way, it is possible to manufacture soles 2 that retain a vivid, chromatically intense coloring even after prolonged use over time.

Usefully, the coloring phase H is performed by means of fast-drying water-based paints 8.

For example, the coloring phase H is performed with one or more coloring nozzles 9 adapted to deliver the paints 8 on the inner face 4a, or with other devices still known to the expert in the field and suitable for performing this phase.

The use of water-based paints 8 proves to be a particularly cost-effective choice for minimizing the environmental impact caused by the very use of paints.

Indeed, the water-based paints 8 produce significantly fewer pollutants than paints of petrochemical origin.

Not only that, but water-based paints 8 release far fewer harmful substances (as much as 95% less) than the aforementioned petrochemical paints, proving to be a preferable choice not only for environmental protection but also for healthfulness of use.

Preferably, in the coloring phase H, the paints 8 are applied to the inner face 4a at a temperature comprised between 25 °C and 35 °C.

At this temperature range, in fact, the paints 8 have a viscosity (which, as is well known, is a variable magnitude depending on temperature) such that effective and aesthetically appreciable coloration of the inner face 4a is possible.

Conveniently, the coloring phase H comprises at least one step of application H1 of the paints 8 to the inner face 4a.

Specifically, the step of application H1 has a duration comprised between 20 seconds and 60 seconds.

In addition, the coloring phase H comprises at least one step of solidification H2, following the step of application H1, of the paints 8 applied to the inner face 4a.

In this regard, it should be pointed out that the special expedient of providing fast-drying paints 8 allows the step of solidification H2 to be performed in a short time, thereby maximizing the production output of the soles 2.

It is also worth noting that the special expedient of providing a heating phase G further reduces the drying time.

In fact, once in contact with the previously heated inner face 4a, the paints rapidly heat to cause at least partial evaporation of the aqueous part contained therein.

This evidently makes it possible to greatly accelerate the manufacturing process of the soles 2 by obtaining, therefore, a product suitable to meet the typical needs of the luxury market, especially the required lead time.

Precisely, the step of solidification H2 lasts between 30 seconds and 2 minutes. It is good, at this point, to highlight how the coloring phase H and the spreading phase E contribute synergistically to obtaining soles 2 with a valuable and appreciable aesthetic appearance.

In fact, by performing the spreading phase E prior to the coloring phase H makes it possible to obtain a particularly smooth coating film 4 that is not only aesthetically pleasing but, precisely because it is free of surface discontinuities, also effectively and easily colorable in the subsequent coloring phase H.

In other words, a smooth coating film 4 allows the paint 8 to be evenly applied to the whole inner face 4a, thus averting the risk of leaving areas of it unpainted or only partly painted and, therefore, achieving a particularly high-quality end product.

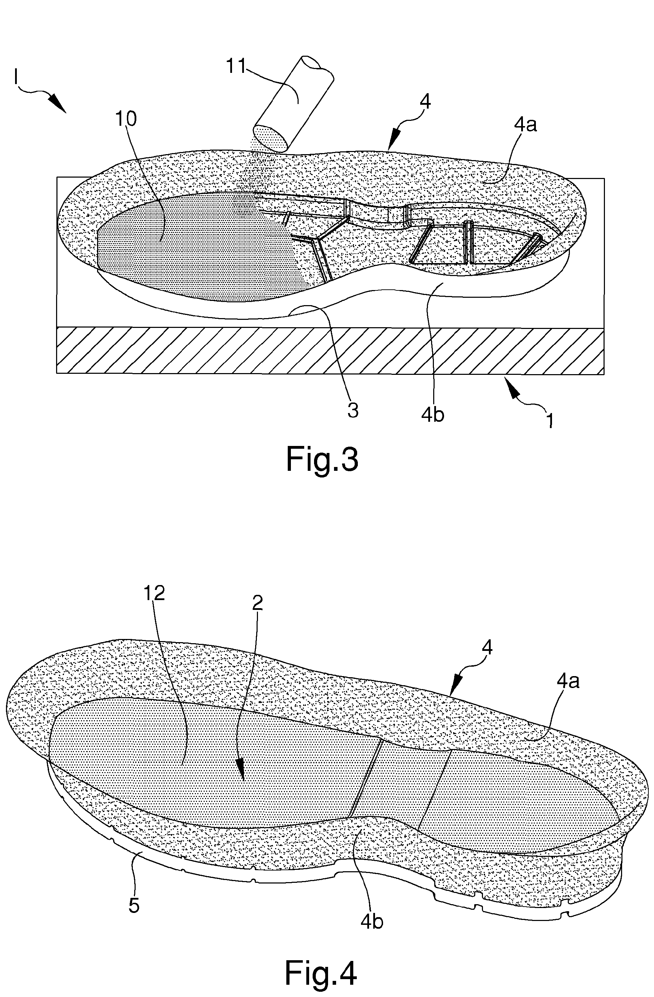

In addition, the process comprises at least one phase of injection I of at least one plastic material 10 which is melted inside the forming mold 1, illustrated as an example in Figure 3.

It is specified, in this regard, that by using the term "injection" various methods of introducing the molten plastic material 10 into the forming mold 1 are intended to be encompassed, such as by injection and/or spraying and/or casting.

Specifically, the injection phase I is performed subsequently to the coloring phase H.

During the injection phase I, the plastic material 10 is cast inside the coating film 4.

For example, the plastic material 10 can be cast inside the coating film 4 by means of one or more injection nozzles 11, or by means of other devices still known to the expert in the field and suitable for performing this phase.

Specifically, the plastic material 10 is cast on the inner face 4a.

In detail, the plastic material 10 is cast at a temperature comprised between 40 °C and 60 °C.

In this regard, it should be specified that, according to a first embodiment, the plastic material 10 is ether-based polyurethane.

In the former case, in fact, the plastic material 10 reaches a temperature of 100°C to 120°C during the injection phase I.

Alternatively, in accordance with a second embodiment, the plastic material 10 is ester-based polyurethane.

In the latter case, the plastic material 10 reaches a temperature of 130°C to 160°C during the injection phase I.

In addition, the process comprises at least one molding phase L of the plastic material 10.

In particular, the molding phase L is subsequently to the injection phase I.

In detail, the molding phase L lasts between 24 hours and 72 hours, better still between 36 hours and 60 hours, preferably equal to 48 hours.

In this regard, the molding phase L comprises at least one step of curing L1 of the plastic material 10 in the coating film 4.

During the step of curing L1, the plastic material 10 expands from a minimum volume, which it possesses upon its injection inside the forming mold 1, to a maximum volume.

In this regard, the step of curing L1 lasts between 3 minutes and 12 minutes.

At the end of the step of curing L1, however, the plastic material 10 is still hot and unsuitable for immediate handling.

In this sense, the molding phase L comprises at least one step of cooling L2 of the expanded plastic material 10.

Specifically, the step of cooling L2 lasts between 36 and 37 hours.

Once the molding phase L of the plastic material 10 is completed, the latter is solidified inside the colored coating film 4 and at a temperature that makes it easy to handle and manage.

It is easy to appreciate that the process just described can be repeated numerous times to obtain a corresponding number of coated and colored soles 2.

In this sense, the present invention also relates to a sole 2 for shoes.

Preferably, the sole 2 is manufactured by following the process just described.

In this case, the sole 2 comprises:
- at least one main body 12 made at least partly of polyurethane (PU);
- at least one coating film 4 made at least partly of thermoplastic polyurethane (TPU);

According to the invention, the coating film 4 comprises at least one colored inner face 4a.

As explained earlier, the special expedient of providing a colored inner face 4a allows manufacturing a particularly durable and wear-resistant colored sole 2. As visible in Figure 4, the sole 2 may be provided with a tread 5 associated with the coating film 4 below.

In fact, the fact of providing a tread 5 allows for an additional increase in sole strength and for an increased stability and ground grip during walking.

It has in practice been ascertained that the described invention achieves the intended objects.

In particular, the fact is emphasized that the special expedient of providing a coloring phase performed prior to the injection phase allows obtaining aesthetically valuable colored soles that are durable and resistant to wear and tear, particularly to friction wear.

## Claims

1. Process for the manufacture of soles for shoes, comprising at least the phases of:
- preparation (A) of at least one forming mold (1) of at least one sole (2);
- supply (B) of at least one coating film (4) inside said forming mold (1), said coating film (4) being provided with at least one inner face (4a) arranged, in use, in contact with said sole (2) and with at least one outer face (4b), opposite said inner face (4a);
- injection (I) of at least one plastic material (10) melted inside said forming mold (1);
wherein said process comprises, prior to said injection phase (I), at least one coloring phase (H) of said inner face (4a);
**characterized by** the fact that said coloring phase (H) is performed by means of fast-drying water-based paints (8).

2. Process according to claim 1, **characterized by** the fact that it comprises at least one spreading phase (E) of said coating film (4) prior to said coloring phase (H).

3. Process according to claim 2, **characterized by** the fact that said spreading phase (E) is performed by means of pneumatic suction means (6) associated with said forming mold (1).

4. Process according to one or more of the preceding claims, **characterized by** the fact that, in said coloring phase (H), said paints (8) are applied to said inner face (4a) at a temperature comprised between 25°C and 35°C.

5. Process according to one or more of the preceding claims, **characterized by** the fact that it comprises at least one heating phase (G) of said forming mold (1) to at least one temperature comprised between 45°C and 95°C.

6. Process according to one or more of the preceding claims, **characterized by** the fact that said plastic material (10) is ether-based polyurethane.

7. Process according to one or more of claims 1 to 6, **characterized by** the fact that said plastic material (10) is ester-based polyurethane.

8. Process according to one or more of the preceding claims, **characterized by** the fact that it comprises, between said preparation phase (A) and said supply phase (B), at least one insertion phase (C) of at least one tread (5) into said forming mold (1).

9. Process according to claim 8, **characterized by** the fact that it comprises at least one bonding phase (D) of said tread (5) to said coating film (4) comprising at least one step of placing (D1) at least one adhesive material on said tread (5) adapted to make said tread (5) and said coating film (4) adhere to each other.

10. Process according to one or more of the preceding claims, **characterized by** the fact that it comprises, subsequently to said injection phase (I), at least one molding phase (L) of said plastic material (10).

11. Sole (2) for shoes, comprising:
- at least one main body (12) made at least partly of polyurethane;
- at least one coating film (4) made at least partly of thermoplastic polyurethane;
**characterized by** the fact that said coating film (4) comprises at least one colored inner face (4a) colored by means of fast-drying water-based paints (8).

## Patentansprüche

1. Verfahren zur Herstellung von Schuhsohlen, umfassend mindestens die folgenden Schritte:
- Vorbereitung (A) mindestens einer Form (1) für mindestens eine Sohle (2);
- Zuführen (B) mindestens einer Beschichtungsfolie (4) in die Form (1), wobei die Beschichtungsfolie (4) mindestens eine Innenfläche (4a), die während des Gebrauchs in Kontakt mit der Sohle (2) steht, und mindestens eine Außenfläche (4b) gegenüber der Innenfläche (4a) aufweist;
- Einspritzen (I) mindestens eines geschmolzenen Kunststoffmaterials (10) in die Form (1);
wobei das Verfahren vor der Einspritzphase (I) mindestens eine Färbephase (H) der Innenfläche (4a) umfasst,
**dadurch gekennzeichnet, dass** die Färbephase (H) mittels schnell trocknender Farben auf Wasserbasis (8) durchgeführt wird.

2. Verfahren nach Anspruch 1, **dadurch gekennzeichnet, dass** es vor der Färbephase (H) mindestens eine Ausbreitungsphase (E) der Beschichtungsfolie (4) umfasst.

3. Verfahren nach Anspruch 2, **dadurch gekennzeichnet, dass** die Ausbreitungsphase (E) mittels pneumatischer Saugmittel (6) durchgeführt wird, die mit der Form (1) verbunden sind.

4. Verfahren nach einem oder mehreren der vorhergehenden Ansprüche, **dadurch gekennzeichnet, dass** in der Färbephase (H) die Farben (8) auf die Innenfläche (4a) bei einer Temperatur zwischen 25 °C und 35 °C aufgetragen werden.

5. Verfahren nach einem oder mehreren der vorhergehenden Ansprüche, **dadurch gekennzeichnet, dass** es mindestens eine Heizphase (G) der Form (1) auf mindestens eine Temperatur zwischen 45 °C und 95 °C umfasst.

6. Verfahren nach einem oder mehreren der vorhergehenden Ansprüche, **dadurch gekennzeichnet, dass** der Kunststoff (10) ein Polyurethan auf Etherbasis ist.

7. Verfahren nach einem oder mehreren der Ansprüche 1 bis 6, **dadurch gekennzeichnet, dass** der Kunststoff (10) ein Polyurethan auf Esterbasis ist.

8. Verfahren nach einem oder mehreren der vorhergehenden Ansprüche, **dadurch gekennzeichnet, dass** es zwischen der Vorbereitungsphase (A) und der Zuführungsphase (B) mindestens eine Einsetzphase (C) mindestens einer Lauffläche (5) in die Form (1) umfasst.

9. Verfahren nach Anspruch 8, **dadurch gekennzeichnet, dass** es mindestens eine Phase (D) zum Verbinden der Lauffläche (5) mit der Beschichtungsfolie (4) umfasst, die mindestens einen Schritt (D1) zum Aufbringen mindestens eines Klebematerials auf die Lauffläche (5) umfasst, das ausgebildet ist, die Lauffläche (5) und die Beschichtungsfolie (4) miteinander zu verbinden.

10. Verfahren nach einem oder mehreren der vorhergehenden Ansprüche, **dadurch gekennzeichnet, dass** es im Anschluss an die Einspritzphase (I) mindestens eine Formphase (L) des Kunststoffmaterials (10) umfasst.

11. Schuhsohle (2) umfassend:
- mindestens einen Hauptkörper (12), der mindestens teilweise aus Polyurethan besteht;
- mindestens eine Beschichtungsfolie (4), die mindestens teilweise aus thermoplastischem Polyurethan besteht;
**dadurch gekennzeichnet, dass** die Beschichtungsfolie (4) mindestens eine farbige Innenfläche (4a) aufweist, die mit schnell trocknenden Farben auf Wasserbasis (8) gefärbt ist.

## Revendications

1. - Procédé de fabrication de semelles pour chaussures, comprenant au moins les phases de :
- préparation (A) d'au moins un moule de formage (1) d'au moins une semelle (2) ;
- introduction (B) d'au moins un film de revêtement (4) à l'intérieur dudit moule de formage (1), ledit film de revêtement (4) comportant au moins une face interne (4a) disposée, lors de l'utilisation, en contact avec ladite semelle (2) et avec au moins une face externe (4b), opposée à ladite face interne (4a) ;
- injection (I) d'au moins une matière plastique (10) fondue à l'intérieur dudit moule de formage (1) ;
ledit procédé comprenant, avant ladite phase d'injection (I), au moins une phase de coloration (H) de ladite face interne (4a) ;
**caractérisé par le fait que** ladite phase de coloration (H) est réalisée au moyen de peintures à base aqueuse à séchage rapide (8).

2. - Procédé selon la revendication 1, **caractérisé par le fait qu'**il comprend au moins une phase d'étalement (E) dudit film de revêtement (4) préalablement à ladite phase de coloration (H).

3. - Procédé selon la revendication 2, **caractérisé par le fait que** ladite phase d'étalement (E) est réalisée à l'aide de moyens d'aspiration pneumatique (6) associés audit moule de formage (1).

4. - Procédé selon l'une ou plusieurs des revendications précédentes, **caractérisé par le fait que**, dans ladite phase de coloration (H), lesdites peintures (8) sont appliquées sur ladite face interne (4a) à une température comprise entre 25°C et 35°C.

5. - Procédé selon l'une ou plusieurs des revendications précédentes, **caractérisé par le fait qu'**il comprend au moins une phase de chauffage (G) dudit moule de formage (1) à au moins une température comprise entre 45°C et 95°C.

6. - Procédé selon l'une ou plusieurs des revendications précédentes, **caractérisé par le fait que** ladite matière plastique (10) est un polyuréthane à base d'éther.

7. - Procédé selon l'une ou plusieurs des revendications 1 à 6, **caractérisé par le fait que** ladite matière plastique (10) est un polyuréthane à base d'ester.

8. - Procédé selon l'une ou plusieurs des revendications précédentes, **caractérisé par le fait qu'**il comprend, entre ladite phase de préparation (A) et ladite phase d'introduction (B), au moins une phase d'insertion (C) d'au moins une semelle extérieure (5) dans ledit moule de formage (1).

9. - Procédé selon la revendication 8, **caractérisé par le fait qu'**il comprend au moins une phase de collage (D) de ladite semelle extérieure (5) audit film de revêtement (4) comprenant au moins une étape de mise en place (D1) d'au moins une matière adhésive sur ladite semelle extérieure (5) apte à faire adhérer entre eux ladite semelle extérieure (5) et ledit film de revêtement (4)

10. - Procédé selon l'une ou plusieurs des revendications précédentes, **caractérisé par le fait qu'**il comprend, après ladite phase d'injection (I), au moins une phase de moulage (L) de ladite matière plastique (10).

11. - Semelle (2) pour chaussures, comprenant :
- au moins un corps principal (12) fait au moins en partie de polyuréthane ;
- au moins un film de revêtement (4) fait au moins en partie de polyuréthane thermoplastique ;
**caractérisée par le fait que** ledit film de revêtement (4) comprend au moins une face interne colorée (4a), colorée au moyen de peintures à base aqueuse à séchage rapide (8).
